# EUROPEAN PATENT SPECIFICATION

(11) **EP 2 667 989 B1**
(45) Date of publication and mention of the grant of the patent: **27.05.2020**
(21) Application number: 12706767.6
(22) Date of filing: 24.01.2012
(51) Int. Cl.: B22F 5/00, B22F 3/105, B22F 7/08, B29C 45/73, B22F 7/06, B29C 45/26, B29C 33/38

(54) **A METHOD FOR THE MANUFACTURE OF A MOULD PART WITH CHANNEL FOR TEMPERATURE REGULATION AND A MOULD PART MADE BY THE METHOD**
VERFAHREN ZUR HERSTELLUNG EINES FORMTEILS MIT EINEM KANAL ZUR TEMPERATURREGELUNG UND IN DIESEM VERFAHREN HERGESTELLTES FORMTEIL
PROCÉDÉ DE FABRICATION D'UN ÉLÉMENT DE MOULE DOTÉ D'UN CANAL DE RÉGULATION DE TEMPÉRATURE ET ÉLÉMENT DE MOULE FABRIQUÉ SELON CE PROCÉDÉ

(30) Priority: 25.01.2011 DK 201170040
(43) Date of publication of application: 04.12.2013
(73) Proprietor: LEGO A/S, 7190 Billund (DK)
(72) Inventor: DALAGER SØRENSEN, Sven, 6880 Tarm (DK); THERKELSEN, Ole, 7190 Billund (DK)
(74) Representative: Guardian IP Consulting I/S
(86) International application number: PCT/DK2012/050029
(87) International publication number: WO 2012/100779

(56) References cited:
- US-A- 6 112 804
- US-B2- 7 261 550
- "thermal pins", , 6 February 2007 (2007-02-06), pages 121-123, XP55027297, Retrieved from the Internet: URL:http://web.archive.org/web/20070206082 023/http://www.bmsburns.com/catalog/pages1 20-123.pdf [retrieved on 2012-05-15]

## Description

### Field of application of the invention

The present invention relates to a method for the manufacture of a mould part for an injection moulding tool, said mould part being configured from powdered sintering metal by successive sintering of multiple layers of sintering metal to the effect that the cooling channel and the outer mould of the mould part are formed completely or partially, and wherein the mould part has an outer mould that comprises a mould surface which is configured such that it faces towards the mould cavity of the injection moulding tool, and a second surface facing away from the mould cavity in the injection moulding tool, and wherein the mould part further comprises at least one cooling channel having at least two openings configured on the second surface of the mould part.

### State of the art

Tools for use in injection moulding are known in many configurations, and it is an ongoing challenge to be capable of manufacturing mould tools that provide the option of moulding in particular plastics work pieces of complex geometry, while simultaneously tool costs and the cycle time for the injection moulding process are kept down.

Thus, from eg US patent No. 5753274 a method for the production of complex work pieces of metal is known, whereby the complex work piece is constructed layer by layer by sintering of many thin layers of sintering metal on top of each other, and whereby the individual layers are heated locally by means of a laser or other influence to the effect that the layer of sintering metal melts where it is desired.

Thus, those methods enable the production of mould parts for injection moulding tools as it is known eg from US patent No. 7261550.

In particular in the context of very complex geometries, it is thus enabled that the localization of the cooling channels can be optimised, and that machining processing of the mould part is minimised, and hence that the manufacturing costs for the production of mould parts can be minimised, while simultaneously the cycle time of the injection moulding process is minimised.

### Object of the invention

Based on this, it is the object of the present invention to provide mould parts for injection moulding tools, whereby those advantages of a sintering process are used to further advantage.

According to the present invention as defined in independent claims 1 and 7, this is accomplished in that it is hereby enabled to use the sintering process also in the context of mould parts having relatively long and thin cores, said mould part further comprising a substantially rectilinear channel extending from the mould surface of the mould part until the cooling channel, and wherein, in the substantially rectilinear channel, a pin is configured which is made of a material having a coefficient of thermal conductivity which is higher than the coefficient of thermal conductivity of the sintering metal, and such that the pin closes the substantially rectilinear channel, and such that at least a portion of the one end of the pin extends into the cooling channel.

In order to provide good thermal conductivity, the substantially rectilinear channel is particularly advantageously configured by a machining process, such as boring out of the mould part.

However, the substantially rectilinear channel may advantageously be completely or partially formed in the same sintering process as the one by which the cooling channel and the mould part exterior are formed to the effect that further machining processing is rendered completely or partially superfluous. However, in this context it is still possible to obtain efficient thermal conductivity if the substantially rectilinear channel formed by the sintering process is further processed by a machining process such as by boring out.

Particularly conveniently, the end of the pin that faces towards the mould surface of the mould part is concealed underneath the mould surface by means of a plug, a screw or other element suitable for that purpose; however, in a preferred embodiment of the invention the mould part is manufactured in that, following mounting of the pin in the substantially rectilinear channel, sintering metal is further added by successive sintering of several layers of sintering metal in such a manner that the substantially rectilinear channel, and hence the pin, is completely enclosed in the mould part.

According to a preferred embodiment, the pin is made of a metal, including copper or aluminium.

Obviously, this method is particularly suitable in the production of mould parts such as core parts that can be mounted in an injection moulding tool; but it is possible, in accordance with the invention, to manufacture complete injection moulding tools.

### List of figures

Figure 1: is an explanatory sketch in the form of a sectional view showing a mould part according to the invention mounted in an ordinary injection moulding tool.
Figure 2: is a sectional view showing a first embodiment of a not finished mould part according to the invention, without mounted pin.
Figure 3: is a sectional view showing the mould part shown in figure 2 provided with a pin.

### Embodiment of the invention

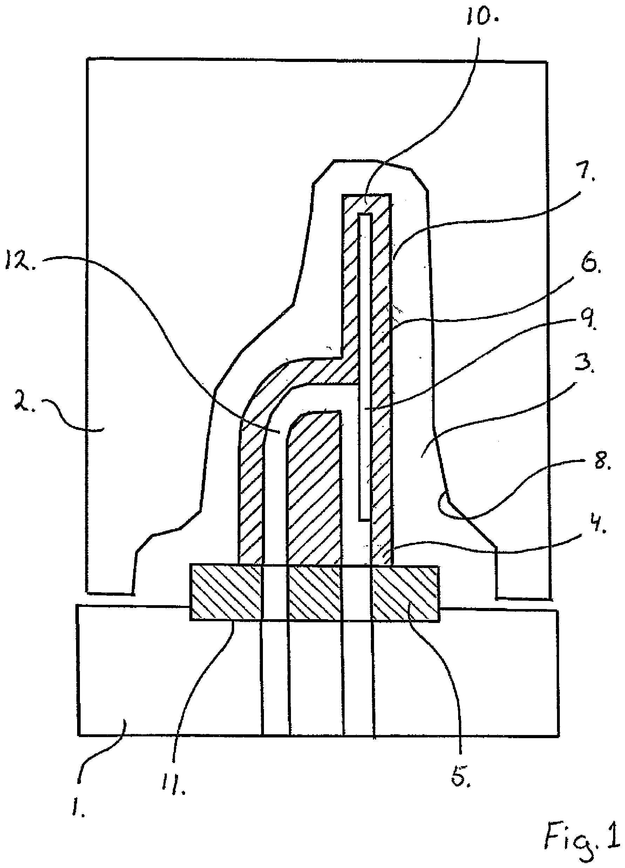

Thus, figure 1 shows an explanatory sketch showing an injection moulding tool consisting of two parts 1, 2; and wherein the one part 1 has an interior surface 8 forming a part of the mould cavity 3, and wherein the second part 2 is configured with a mould part 4 forming a core in the injection moulding tool.

The mould part 4 (which is hatched in this figure) comprises a plate-shaped part 5 on which a mould core 6 is built which has been formed by successive sintering of thin layers of a powered sintering metal, such as steel, eg as it is known from the above-mentioned US patents No. 5753274 and No. 7261550.

The plate-shaped part 5 may be configured either from a piece of massive plate material which has been formed eg by a machining process, or it may equally be produced in a sintering process in the same manner as the mould core 6.

Thereby the mould core 7 comprises a mould surface 7 which, along with the interior surface 8 on the one part 1 of the injection moulding process, forms the entire or parts of the mould cavity 3. In addition to the mould surface 7, the mould part 4 also comprises a second surface 11 facing away from the mould cavity 3, and wherein the two openings for the cooling channel 12 are arranged.

In the mould part 4, which comprises the mould core 6 and the plate-shaped part 5, there is provided, as mentioned, a cooling channel 12 for through-flow of a cooling medium, and, in accordance with the invention, a pin 9 is provided that consists of a material having a coefficient of thermal conductivity which is higher than the coefficient of thermal conductivity of the sintering metal that is used for building the mould part 4, the plate-shaped part 5, or the mould core 6.

As will appear from figure 1, the pin 9 is completely enclosed in the mould core 6, there being provided a lid 10, at the upper end of the mould core, in close proximity of the mould surface 7, by sintering, to the effect that the lid 10 covers the pin 9 and constitutes a part of the mould surface 7.

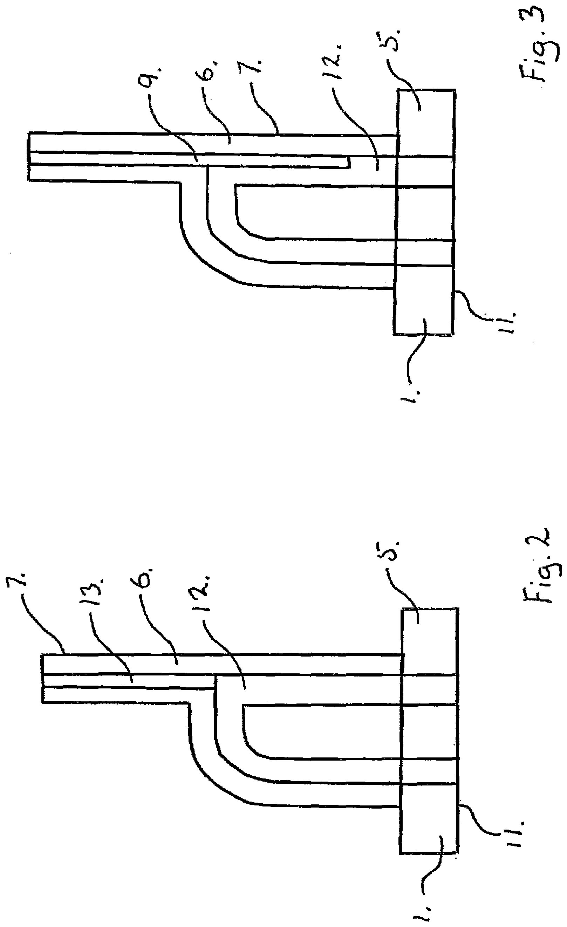

Now, figures 2 and 3 show the mould part 4 which is shown in figure 1 after a first and a second production process, figure 1 showing the sintered mould core 6 and the plate-shaped part which may also be formed in the sintering process. Here it will appear that, after the first production process, the mould core is provided with a rectilinear channel 13 which may, quite simply, be formed during the sintering process, but which may also possibly be produced by a subsequent boring out of the channel 13 after the mould core 6 has been produced in the sintering process.

Now figure 3 shows the same mould core 6 as is shown in figure 2, but herein the pin 9 has, however, been inserted such that the one end of the pin 9 is substantially aligned with the mould surface on the mould core 6, following which it may again undergo a further sintering process to the effect that the final mould core 6 ends up being as shown in figure 1 where the pin 9 is enclosed in the sintered mould core 6.

Obviously, it may be possible to make mould parts comprising more pins than the one shown in the figures, and the pins 9 may be oriented in different directions from the cooling channel 12 to the effect that it is possible to establish a uniform cooling of the mould part 6 irrespective of the shape of the mould part 6.

## Claims

1. A method for the manufacture of a mould part (4) for an injection moulding tool, said mould part (4) comprising a mould core (6), a mould surface (7) facing towards the mould cavity of the injection moulding tool (1, 2), and a second surface (11) facing away from the mould cavity in the injection moulding tool (1,2), and wherein the mould part (4) further comprises at least one cooling channel (12) having at least two openings configured on the second surface (11) of the mould part (4), and a plate-shaped part (5) through which the cooling channel extends; said method comprising the following steps:
a. building of the mould part (4) by successive powdered sintering of several layers of sintering metal, wherein the cooling channel (12) and the mould surface (7) are formed completely or partially;
b. forming of a substantially rectilinear channel extending from the mould surface (7) of the mould part (4) until the cooling channel (12)
c. mounting of a pin in the substantially rectilinear channel, said pin being configured from a material having a coefficient of thermal conductivity which is higher than the coefficient of thermal conductivity of the sintering metal to the effect that the pin closes the substantially rectilinear channel and at least one end of the pin faces the mould surface (7) and extends into the cooling channel (12), such that the substantially rectilinear channel and the pin are completely enclosed in the mould part and are covered by at least a portion of the mould surface (7).

2. A method according to claim 1, **characterised in that** the substantially rectilinear passage is configured by a machining process, such as boring out of the mould part (4).

3. A method according to claim 1, **characterised in that** the substantially rectilinear channel is completely or partially formed in the same sintering process as the one by which the cooling channel (12) and the mould part exterior are formed.

4. A method according to claim 3, **characterised in that** the substantially rectilinear channel formed in the sintering process is further processed by a machining process, such as by boring out.

5. A method according to one or more of the preceding claims, **characterised in that** the mould part (4) is, following mounting of the pin in the substantially rectilinear channel, further supplied with sintering metal by successive sintering of several layers of sintering metal in such a way that a lid (10) of sintering metal is formed across the opening of the substantially rectilinear channel, on the mould surface thereof, and such that the substantially rectilinear channel is enclosed completely in the mould part (4).

6. A method according to one or more of the preceding claims, **characterised in that** the pin is made of a metal comprising copper or aluminium.

7. A mould part (4) for an injection moulding tool (1, 2), said mould part being configured from sintering metal and comprising a mould core (6), a mould surface (7) facing towards a mould cavity of the injection moulding tool (1, 2), and a second surface (11) facing away from the mould cavity in the injection moulding tool (1,2), wherein the mould part (4) further comprises at least one cooling channel (12) having at least two openings configured on the second surface (11) of the mould part (4), and a plate-shaped part (5) through which the cooling channel extends, wherein the mould surface (7) and the cooling channel (12) are formed completely or partially, and wherein the mould part (4) further comprises a substantially rectilinear channel extending from the mould surface (7) of the mould part until the cooling channel (12), and wherein, in the substantially rectilinear channel, a pin is mounted which is made of a material having a coefficient of thermal conductivity which is higher than the coefficient of thermal conductivity of the sintering metal, and such that the pin closes the substantially rectilinear channel and such that at least a portion of the one end of the pin extends into the cooling channel (12).

8. A mould part according to claim 7, **characterised in that** the pin is configured from a copper- or aluminium-based metal.

9. A mould part according to one of claims 7 or 8, **characterised in that** the opposite end of the pin, the one facing away from the cooling channel (12) is completely enclosed in the mould part configured from sintering metal.

10. An injection moulding tool comprising a mould part according to one or more of claims 7 through 9.

## Patentansprüche

1. Verfahren für die Herstellung eines Formteils (4) für ein Spritzgusswerkzeug, wobei das Formteil (4) einen Formkern (6), eine Formoberfläche (7), die dem Formhohlraum des Spritzgusswerkzeugs (1, 2) zugewandt ist, und eine zweite Oberfläche (11), die von dem Formhohlraum in dem Spritzgusswerkzeug (1, 2) abgewandt ist, umfasst, und wobei das Formteil (4) weiter mindestens einen Kühlkanal (12) umfasst, der mindestens zwei Öffnungen aufweist, die auf der zweiten Oberfläche (11) des Formteils (4) konfiguriert sind, und ein plattenförmiges Teil (5), durch das sich der Kühlkanal erstreckt;
wobei das Verfahren die folgenden Schritte umfasst:
a. Bilden des Formteils (4) durch sukzessives Pulversintern mehrerer Schichten von Sintermetall, wobei der Kühlkanal (12) und die Formoberfläche (7) vollständig oder teilweise geformt werden;
b. Bilden eines im Wesentlichen geradlinigen Kanals, der sich von der Formoberfläche (7) des Formteils (4) bis zu dem Kühlkanal (12) erstreckt;
c. Montieren eines Stifts in dem im Wesentlichen geradlinigen Kanal, wobei der Stift aus einem Material konfiguriert ist, das einen Wärmeleitfähigkeitskoeffizienten aufweist, der höher ist als der Wärmeleitfähigkeitskoeffizient des Sintermetalls, so dass der Stift den im Wesentlichen geradlinigen Kanal schließt und mindestens ein Ende des Stifts der Formoberfläche (7) zugewandt ist und sich in den Kühlkanal (12) derart erstreckt, dass der im Wesentlichen geradlinige Kanal und der Stift vollständig in dem Formteil eingeschlossen und durch mindestens einen Abschnitt der Formoberfläche (7) abgedeckt sind.

2. Verfahren nach Anspruch 1, **dadurch gekennzeichnet, dass** die im Wesentlichen geradlinige Passage durch einen Bearbeitungsprozess, wie Ausbohren des Formteils (4), konfiguriert wird.

3. Verfahren nach Anspruch 1, **dadurch gekennzeichnet, dass** der im Wesentlichen geradlinige Kanal vollständig oder teilweise bei demselben Sinterprozess gebildet wird wie der, durch den der Kühlkanal (12) und die Formteilaußenseite gebildet werden.

4. Verfahren nach Anspruch 3, **dadurch gekennzeichnet, dass** der im Wesentlichen geradlinige Kanal, der bei dem Sinterprozess gebildet wird, weiter durch einen Bearbeitungsprozess, wie durch Ausbohren, verarbeitet wird.

5. Verfahren nach einem der vorstehenden Ansprüche, **dadurch gekennzeichnet, dass** das Formteil (4) im Anschluss an das Montieren des Stifts in dem im Wesentlichen geradlinigen Kanal weiter mit Sintermetall durch sukzessives Sintern mehrerer Schichten aus Sintermetall derart versorgt wird, dass ein Deckel (10) aus Sintermetall über der Öffnung des im Wesentlichen geradlinigen Kanals auf dessen Formoberfläche gebildet wird, und derart, dass der im Wesentlichen geradlinige Kanal vollständig in dem Formteil (4) eingeschlossen wird.

6. Verfahren nach einem oder mehreren der vorstehenden Ansprüche, **dadurch gekennzeichnet, dass** der Stift aus einem Metall besteht, das Kupfer oder Aluminium umfasst.

7. Formteil (4) für ein Spritzgusswerkzeug (1, 2), wobei das Formteil aus Sintermetall konfiguriert ist und einen Formkern (6), eine Formoberfläche (7), die einem Formhohlraum des Spritzgusswerkzeugs (1, 2) zugewandt ist, und eine zweite Oberfläche (11), die von dem Formhohlraum in dem Spritzgusswerkzeug (1, 2) abgewandt ist, umfasst, wobei das Formteil (4) weiter mindestens einen Kühlkanal (12) umfasst, der mindestens zwei Öffnungen aufweist, die auf der zweiten Oberfläche (11) des Formteils (4) konfiguriert sind, und ein plattenförmiges Teil (5), durch das sich der Kühlkanal erstreckt, wobei die Formoberfläche (7) und der Kühlkanal (12) vollständig oder teilweise ausgebildet sind, und wobei das Formteil (4) weiter einen im Wesentlichen geradlinigen Kanal umfasst, der sich von der Formoberfläche (7) des Formteils bis zu dem Kühlkanal (12) erstreckt, und
wobei in dem im Wesentlichen geradlinigen Kanal ein Stift montiert ist, der aus einem Material hergestellt ist, das einen Wärmeleitfähigkeitskoeffizienten aufweist, der höher ist als der Wärmeleitfähigkeitskoeffizient des Sintermetalls, und derart, dass der Stift den im Wesentlichen geradlinigen Kanal verschließt, und dass sich mindestens ein Abschnitt des einen Endes in den Kühlkanal (12) erstreckt.

8. Formteil nach Anspruch 7, **dadurch gekennzeichnet, dass** der Stift aus einem auf Kupfer oder Aluminium basierenden Metall konfiguriert ist.

9. Formteil nach einem der Ansprüche 7 oder 8, **dadurch gekennzeichnet, dass** das entgegengesetzte Ende des Stifts, das eine, das von dem Kühlkanal (12) abgewandt ist, vollständig in dem Formteil, das aus Sintermetall konfiguriert ist, eingeschlossen ist.

10. Spritzgusswerkzeug, das ein Formteil nach einem oder mehreren der Ansprüche 7 bis 9 umfasst.

## Revendications

1. Procédé pour la fabrication d'une pièce de moule (4) pour un outil de moulage par injection, ladite pièce de moule (4) comprenant un noyau de moule (6), une surface de moule (7) tournée vers la cavité de moule de l'outil de moulage par injection (1, 2), et une seconde surface (11) tournée à l'opposé de la cavité de moule dans l'outil de moulage par injection (1, 2), et
dans lequel la pièce de moule (4) comprend en outre au moins un canal de refroidissement (12) ayant au moins deux ouvertures configurées sur la seconde surface (11) de la pièce de moule (4), et une pièce en forme de plaque (5) à travers laquelle s'étend le canal de refroidissement ;
ledit procédé comprenant les étapes suivantes :
a. la construction de la pièce de moule (4) par frittage de poudre successif de plusieurs couches de métal de frittage, dans lequel le canal de refroidissement (12) et la surface de moule (7) sont formés complètement ou partiellement ;
b. la formation d'un canal sensiblement rectiligne s'étendant depuis la surface de moule (7) de la pièce de moule (4) jusqu'au canal de refroidissement (12),
c. le montage d'une goupille dans le canal sensiblement rectiligne, ladite goupille étant configurée à partir d'un matériau ayant un coefficient de conductivité thermique qui est plus élevé que le coefficient de conductivité thermique du métal de frittage de sorte que la goupille ferme le canal sensiblement rectiligne et au moins une extrémité de la goupille est tournée vers la surface de moule (7) et s'étend dans le canal de refroidissement (12), de sorte que le canal sensiblement rectiligne et la goupille sont complètement encloisonnés dans la pièce de moule et sont couverts par au moins une portion de la surface de moule (7).

2. Procédé selon la revendication 1, **caractérisé en ce que** le passage sensiblement rectiligne est configuré par un processus d'usinage, tel que l'alésage de la pièce de moule (4).

3. Procédé selon la revendication 1, **caractérisé en ce que** le canal sensiblement rectiligne est formé complètement ou partiellement dans le même processus de frittage que celui grâce auquel le canal de refroidissement (12) et l'extérieur de pièce de moule sont formés.

4. Procédé selon la revendication 3, **caractérisé en ce que** le canal sensiblement rectiligne formé dans le processus de frittage est en outre traité par un processus d'usinage, tel que l'alésage.

5. Procédé selon l'une ou plusieurs des revendications précédentes, **caractérisé en ce que** la pièce de moule (4), suite au montage de la goupille dans le canal sensiblement rectiligne, est en outre alimentée en métal de frittage par frittage successif de plusieurs couches de métal de frittage de manière à ce qu'un couvercle (10) de métal de frittage est formé à travers l'ouverture du canal sensiblement rectiligne, sur sa surface de moule, et de sorte que le canal sensiblement rectiligne est encloisonné complètement dans la pièce de moule (4).

6. Procédé selon l'une ou plusieurs des revendications précédentes, **caractérisé en ce que** la goupille est réalisée en un métal comprenant du cuivre ou de l'aluminium.

7. Pièce de moule (4) pour un outil de moulage par injection (1, 2), ladite pièce de moule étant configurée à partir de métal de frittage et comprenant un noyau de moule (6), une surface de moule (7) tournée vers une cavité de moule de l'outil de moulage par injection (1, 2), et une seconde surface (11) tournée à l'opposé de la cavité de moule dans l'outil de moulage par injection (1, 2), dans laquelle la pièce de moule (4) comprend en outre au moins un canal de refroidissement (12) ayant au moins deux ouvertures configurées sur la seconde surface (11) de la pièce de moule (4), et une pièce en forme de plaque (5) à travers laquelle s'étend le canal de refroidissement, dans laquelle la surface de moule (7) et le canal de refroidissement (12) sont formés complètement ou partiellement, et dans laquelle la pièce de moule (4) comprend en outre un canal sensiblement rectiligne s'étendant depuis la surface de moule (7) de la pièce de moule jusqu'au canal de refroidissement (12), et dans laquelle, dans le canal sensiblement rectiligne, une goupille est montée qui est réalisée en un matériau ayant un coefficient de conductivité thermique qui est plus élevé que le coefficient de conductivité thermique du métal de frittage, et de sorte que la goupille ferme le canal sensiblement rectiligne et de sorte qu'au moins une portion de l'extrémité de la goupille s'étend dans le canal de refroidissement (12).

8. Pièce de moule selon la revendication 7, **caractérisée en ce que** la goupille est configurée à partir d'un métal à base de cuivre ou d'aluminium.

9. Pièce de moule selon l'une des revendications 7 ou 8, **caractérisée en ce que** l'extrémité opposée de la goupille, celle tournée à l'opposé du canal de refroidissement (12), est encloisonnée complètement dans la pièce de moule configurée à partir de métal de frittage.

10. Outil de moulage par injection comprenant une pièce de moule selon l'une ou plusieurs des revendications 7 à 9.
